# EUROPEAN PATENT SPECIFICATION

(11) **EP 0 578 466 B1**
(45) Date of publication and mention of the grant of the patent: **01.10.1997**
(21) Application number: 93305251.6
(22) Date of filing: 05.07.1993
(51) Int. Cl.: A63B 37/00, B29D 31/00, A63B 45/00

(54) **Method and apparatus for forming polyurethane cover on golf ball core**
Methode und Gerät zum Formen einer Polyurethanhülle auf einem Golfballkern
Méthode et appareil pour former un revêtement en polyuréthane sur un noyau de balle de golf

(30) Priority: 06.07.1992 US 909543
(43) Date of publication of application: 12.01.1994
(73) Proprietor: ACUSHNET COMPANY, New Bedford, Massachusetts 02745 (US)
(72) Inventor: Calabria, John, Fairhaven, MA 02719 (US); Snell, Dean A., North Dartmouth, MA 02727 (US); Wu, Shenshen, North Dartmouth, MA 02747 (US)
(74) Representative: Bridge-Butler, Alan James

(56) References cited:
- DE-A- 1 428 816
- US-A- 3 147 324

## Description

The use of urethane polymers has been proposed for golf ball cover compositions. One patent teaches initially forming two urethane shell blanks from which cover halves are made (US Patent number 3,989,568). Another patent suggests forming a smooth cover and thereafter impressing dimples in the smooth cover (US Patent number 5,006,297). Still another patent describes a sequence of filling first half of a mould with urethane, inserting a ball centre therein and later adding more urethane to a second half and uniting the second with the first half (US Patent number 3,147,324).

Broadly, the present invention is a method and apparatus for making a golf ball comprising treating a core as described herein, and placing a polyurethane cover of selected composition thereon in which the treated core is positioned in a mould using a controlled alignment device for centring the core during cover formation.

According to the present invention, there is provided a method of making a golf ball using a core holder and first and second mould halves with the first mould half positioned below the core holder, comprising the steps of placing polyurethane in the first mould half, positioning the core in the first mould half, placing polyurethane in the second mould half, and closing the first and second mould halves about the core, characterised by the steps of:
a) placing a core in the core holder which in turn is held by a movable fixture, wherein the movable fixture comprises an adjustable mould holding means for centring the core;
b) causing the fixture with the core holder to descend against the polyurethane in the first mould half when such polyurethane is in a selected state of gel and causing thereafter the figure means to move at a controlled rate against the polyurethane toward the first mould half;
c) as core downward movement continues, moulding a quantity of partially gelled polyurethane around one half of the core in such first mould half;
d) disengaging the core from the core holder after a selected period of time;
e) thereafter placing such core with its partially cured polyurethane cover while still in said first mould half against a second mould half having polyurethane at a selected state of gel therein and mating the two mould halves together; and
f) heating the mated halves and further curing the polyurethane and thereafter opening the mould.

An embodiiment of the present invention will now be described in detail with reference to the accompanying drawings, in which:
Figure 1 is a plan view of the core treating apparatus;
Figure 2 is an elevational view of such apparatus;
Figure 3 is an elevational view of an alignable device for placing a treated core in a mould half;
Figure 3a is a partial side elevational view of the an alignable device;
Figure 4 is a sectional view along line 4-4 of Figure 3;
Figure 5 is a plan view showing a mould being positioned in the alignment device;
Figure 6 shows apparatus for mixing polyurethane, dispensing it in a mould half and shows one mould half being inverted before mating with a second mould half;
Figure 7 shows a plan view of set-up mould;
Figure 7a shows a side view of set-up core with alignment holes;
Figure 8 is a graph plotting voltage vs. cps;

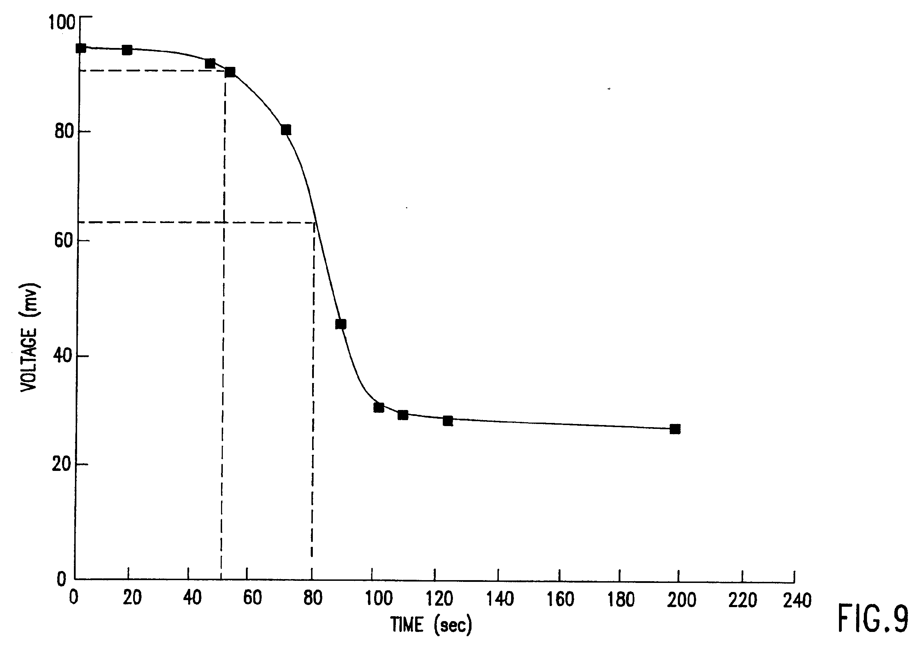

Figure 9 is a graph plotting voltage vs. time;
Figure 10 is a table of process steps in a timed sequence;
Figure 11 is a graph plotting hardness vs. spin rate; and
Figure 12 is a graph plotting initial velocity vs. wound ball size.

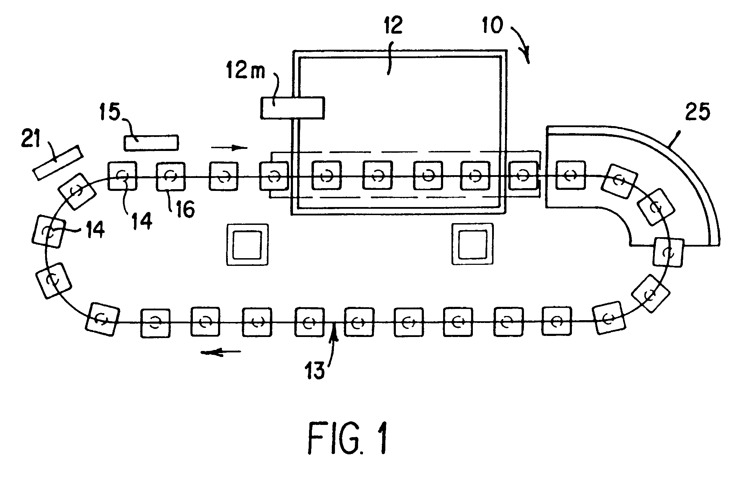

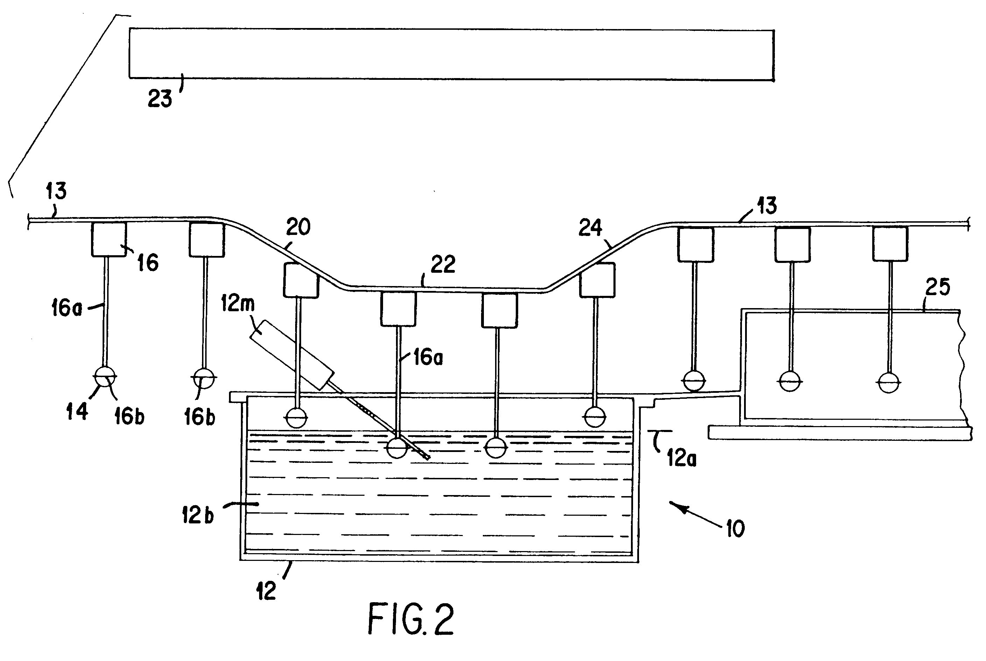

Turning to the Figures, and in particular to Figures 1 and 2, dipping apparatus 10 includes a dip tank 12 filled to level 12a and agitated by electric mixer 12m. Apparatus 10 also includes oval conveying rack 13 with ball core carriers 16. Dip tank 12 is filled with latex bath 12b to level 12a and, if latex had been in tank 12 for a substantial length of time, initial mixing of bath 12b in tank 12 should be carried out until uniformity of bath 12b is reached. After such mixing golf ball cores 14 are loaded at loading station 15 into holding carriers 16 each comprising a stem 16a and a holder ring 16b. During normal operation tank 12 is agitated by electric mixer 12m. Loaded carriers 16 are carried by conveying rack 13 along and down to dip cores 14 for 1 to 60 seconds into latex bath 12b. Rack 13 moves through a descending portion 20, dipping portion 22 and ascending portion 24 of the carrier circuit to accomplish the latex dip core treatment. In wound cores the latex encapsulates the core with penetrate to a depth of about 0.050 inch (1.27 mm) and in solid cores the latex forms an encapsulating coating on the core of 0.001-0.010 inches (0.1254 to 0.254 mm) thick.

After the ball cores 14 exit dip tank 12, they pass into a curing chamber 25 in which heat, ultraviolet rays, or other means for accelerating cure may be applied. It will be understood that some latex bath materials cure sufficiently under ambient conditions that curing chamber 25 is not required. Cores are unloaded at unload station 21.

In accordance with this invention, wound cores 14 preferably are latex dipped while dipping of solid cores 14 is optional. Depending on the nature of the latex material applied, the golf ball dip-treated cores 14 can then be stored for a period of time for additional cure, or, if the latex material is sufficiently cured at this point, the wound cores with the latex dip encapsulate can be transported directly to the moulding area for moulding of the cover material.

Since the latex material generates low levels of ammonia fumes in the dip tank 12, it is preferred to have a vacuum hood 23 positioned above the dip tank 12. The vacuum hood 23 is preferably provided with means (not shown) for generating a clean air curtain about the periphery of the dip tank 12 to prevent escape of undesirable gasses. The curing chamber 25 can also be provided with suitable gas removal means.

As described above, the initial step of the process of the present invention is the dipping of the core in a latex bath. The preferred core is a wound core but any core, moulded or wound, may be treated by the present process. With a moulded core the advantage of such latex dip treatment is the increased velocity attainable to golf balls made with such cores. With a wound core the advantages are increased velocity, reduction of flow of air into the cover material during cover formation and prevention of rubber strand unravelling.

It is important that a thermosetting, not a thermoplastic, latex be employed so that the arrangement of the cover material to the encapsulated core will not soften the encapsulating envelope and permit air to pass through it into the interstices in the windings of the wound core or allow the rubber strands to unravel.

The thermosetting latex materials which are useful in the present invention are any material which will withstand the temperatures at which the cover material is to be applied. This temperature will, of course, depend upon the particular fluidisation temperature of the selected cover material. Typical thermosetting latex materials which can be used are: low ammonia, natural latex or pre-vulcanised natural latex with or without penetrant. When using a polyurethane cover material, it has been found that pre-vulcanised natural latex is particularly suitable.

The preferred latex material, Heveatex brand Model H1704 pre-vulcanised natural latex, is a partially pre-vulcanised material which has a 60%-30% water dilution solids content. The preferred penetrant material is Niaproof #4 (tetra decyl sulphate) sold by Niacet Corporation. It is understood that non-latex encapsulating materials may also be used.

After latex coating, the cover is formed around the coated core by mixing and introducing the material in mould halves. Once mixed, an exothermic reaction commences and continues. It is important that the viscosity be measured over time, so that the subsequent steps of filling each mould half, introducing the core into one half and closing the mould can be properly timed for accomplishing centring of the core, fusion of the cover halves and achieving overall uniformity.

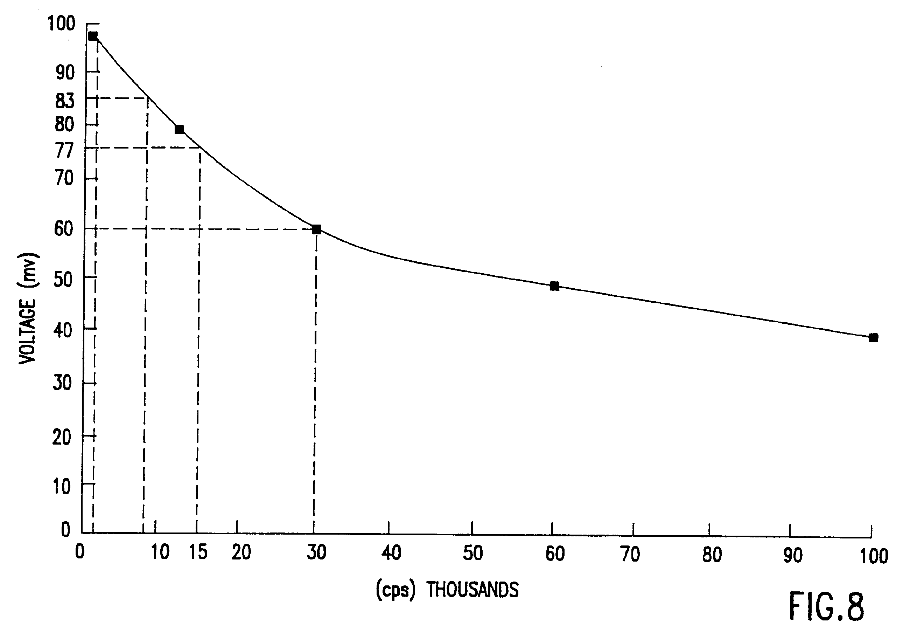

The increase in the viscosity of the urethane mix over time is measured by Vibrating Needle Curemeter (VNC) manufactured by Rapra Technology Limited. It is achieved by suspending a steel needle in the curing formulation. The needle is vibrated vertically by a small electrodynamic vibrator driven by a signal generator. Resistance to its movement is ultimately recorded as the voltage output. Suitable viscosity range of the curing urethane mix for introducing cores 14 into the mould halves 51, 59 is determined to be approximately between 2,000 cps - 30,000 cps or between 60 mv - 98 mv voltage output with the preferred range of 8,000 to 15,000 cps (see Figure 8). The time (gel time) at which the desired viscosity range occurs for mould mating is measured from first introduction of mix into the top half mould 51a.

The dip coating of latex penetrates the interstices, crevices and openings between the wound core threads to a depth of a fraction of an inch preferable about 0.050 inches (0.12 mm) and, as solidified, prevents a substantial quantity of air from flowing from the interior of the core into the cover during its formation. A negligible amount of the latex remains on the outside of the wound core. With solid cores about 0.001-0.010 inches (0.0254 to 0.254 mm) is coated on the surface thus reducing the cover thickness by that amount. Small amounts of air passing through or around the latex coating are not large enough to create noticeable imperfections in the cover as determined by visual inspection.

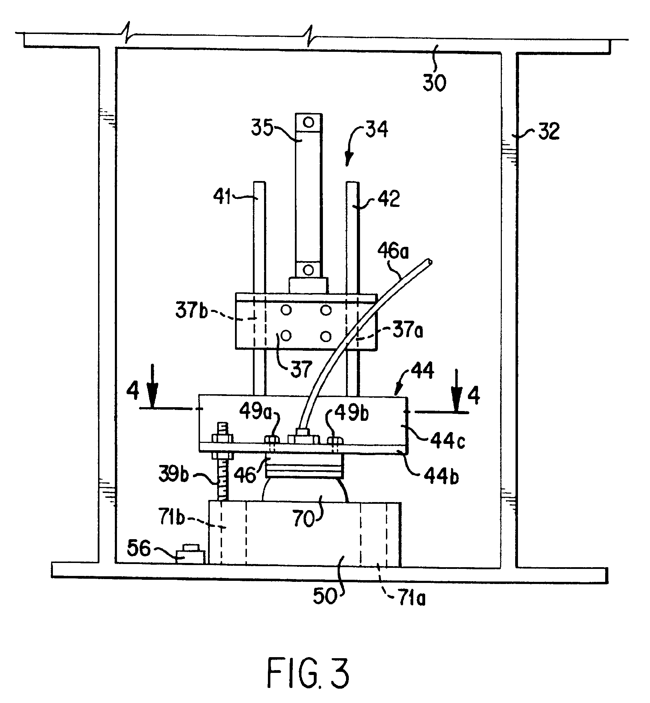

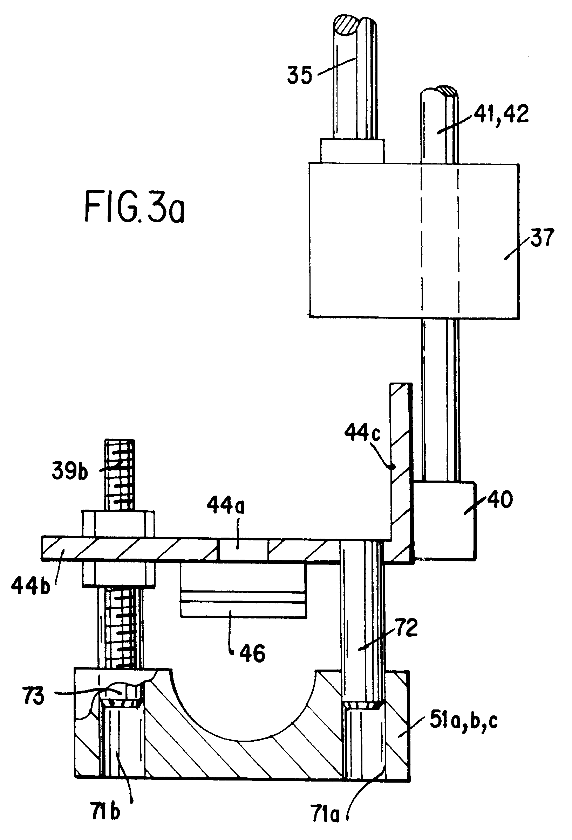

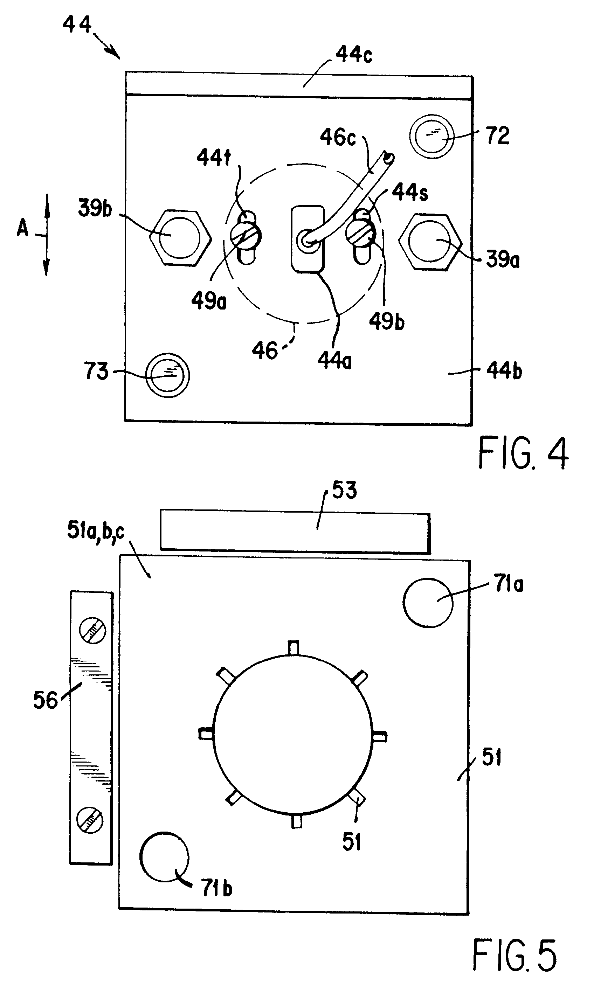

Turning to Figures 3 and 3a, another step of the process is the formation of the cover on the wound core 12. To accomplish this step a centring fixture is used. Fixture unit 30 includes box frame 32, stationary central guide mount 34 comprising fixed cylinder 35 and stationary guide block 37. Guide block 37 has two (2) parallel passageways 37a, 37b therethrough for receiving movable rods 41, 42 in sliding vertical movement. Rods 41, 42 are fixed to slide ball cup frame unit 44, through back piece 40, which unit 44 carries ball cup 46 mounted on cup plate 44b as described (see Figure 3a). Ball cup 46 holds ball core 14 through reduced pressure (or partial vacuum) in hose 46a. Ball cup frame unit 44 includes base plate 44b, central opening 44a and upstanding back plate 44c. Back support 40 is secured to back plate 44c. Ball cup 46 is adjustably secured to cup plate 44b through adjustable fasteners 49a, 49b which ride in slots 44s and 44t (Figure 4). Cup 46 can be adjusted vis-a-vis plate 44b front and back along arrow A (Figure 4).

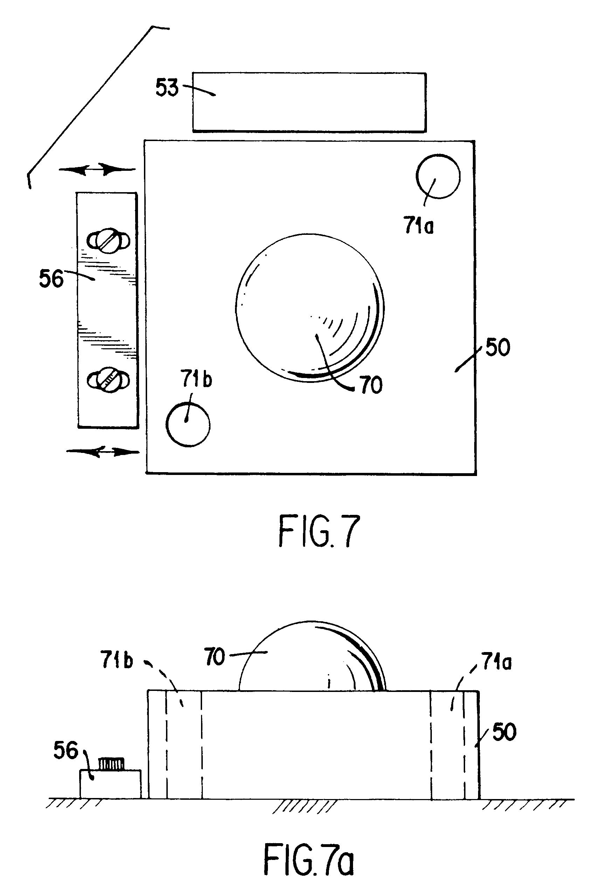

To initially align ball core cup 46 in the proper position for moulding of cover material, a machined metal set-up mould 50 is used. Set-up mould 50 is positioned by lowering unit 44 to permit pins 72,73 to pass through alignment holes 71a, 71b in mould 50. Rails 53 and 56 serve only to assist in placing the mould 50 under unit 44 and after mould 50 is properly aligned it is spaced a few thousandths of an inch from each rail 53, 56 (Figure 7). With ball cup 46 free through loosened fasteners 49a 49b, alignment of cup 46 is accomplished by lowering ball cup 46 until it sits on and contacts set-up core 70. Fasteners 49a, 49b are tightened when flush contact with ball cup 46 and set-up core 70 has been made. Next, mechanical stop 39b is tightened in this position. Frame unit 44 is then raised from set-up mould 50 and set-up mould 50 is removed from fixture 30.

More than one fixture unit 30 is used in the practice of this invention. With fixture unit 30 so aligned, the set-up mould 50 is removed and is ready to be replaced with a ball core 14 and a series of regular mould halves 51b, 51c etc.

The core is centred by fixture unit 30 in the top mould half, as then inverted, to a tolerance of about 0.010 of an inch (0.254mm). Such tolerance is described by determining the theoretical centre of the core in the mould half and tolerating the actual core centre, as fixtured, to be located up to .005 of an inch (0.127mm) in any direction for the theoretical centre. Since the actual centre is tolerated to move .005 inch (0.127mm) in any direction from the theoretical centre, it can move over a range of 0.010 of an inch (0.254mm).

Prior to proceeding with cover formation regular mould halves 51b, 51c are preheated to 140-180°F (60 - 82°C), the prepolymer is preheated and degassed at 140-160°F (60 - 71°C) and the curative is also preheated and degassed at a temperature of 140-160°F (60 - 71°C). As so preheated, the prepolymer and curative both have approximately viscosities of 2,000 cps.

The cover material used in the present method is polyurethane which is the product of a reaction between a polyurethane prepolymer and a curing agent. The polyurethane prepolymer is a product formed by a reaction between a polyol and a diisocyanate. The curing agent is either a polyamine or glycol. A catalyst may be employed to promote the reaction between the curing agent and the polyurethane prepolymer.

Suitable polyurethane prepolymers for use in the present invention are made from a polyol, such as polyether, polyester or polyactone, and a diisocyanate. Suitable diisocyanates for use in the present invention include 4,4'-diphenylmethane diisocyanate (MDI) and 3,3'dimethyl-4,4'-biphenylene diisocyanate (TODI) and toluene diisocyanate (TDI).

Suitable polyether polyols include polytetramethylene ether glycol; poly(oxypropylene) glycol; and polybutadiene glycol. Suitable polyester polyols include polyethylene adipate glycol; polyethylene propylene adipate glycol; and polybutylene adipate glycol. Suitable polyactone polyols include diethylene glycol initiated caprolactone; 1,4-butanediol initiated caprolactone; trimethylol propane initiated caprolactone; and neopentyl glycol initiated caprolactone. The preferred polyols are polytetramethylene ether glycol; polyethylene adipate glycol; polybutylene adipate glycol; and diethylene glycol initiated caprolactone.

Suitable curatives for use in the present invention are selected from the slow-reacting polyamine group consisting of 3,5-dimethylthio-2,4-toluenediamine; 3,5-dimethylthio-2,6-toluenediamine; N,N'-dialkyldiamino diphenyl methane; trimethylene-glycol-di-p-aminobenzoate; polytetramethyleneoxide-di-p-aminobenzoate; or a difunctional glycol; and mixtures thereof. 3,5-dimethylthio-2,4-toluenediamine and 3,5-dimethylthio-2,6-toluenediamine are isomers and are sold under the trade name of ETHACURE (Registered Trade Mark) 300 by Ethyl Corporation.
Trimethylene glycol-di-p-aminobenzoate is sold under the trade name POLACURE 740M and polytetramethyleneoxide-di-p-aminobenzoates are sold under the trade name Polamine by Polaroid Corporation.
N,N'-dialkyldiamino diphenyl methane is sold under the trade name UNILINK (Registered Trade Mark) by UOP.

Suitable difunctional glycols are 1,4-butanediol; 1,3-butanediol; 2,3-butanediol; 2,3-dimethyl-2,3-butanediol; dipropylene glycol; and ethylene glycol. Difunctional glycols are inherently slow-reacting.

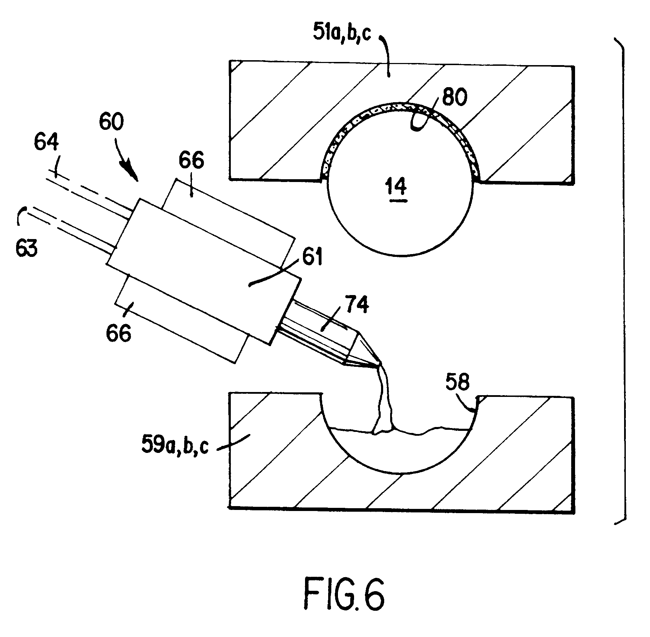

To start the cover formation, mixing of the prepolymer and curative is accomplished in motorised mixer 60 (Figure 6) including mixing head 61 by feeding through lines 63 and 64 metered amounts of curative and prepolymer. The mixer 60 is cooled by cooling jacket 66. Due to the exothermic reaction of prepolymer and curative as mixed, the mixing head temperature will tend to rise. To control such a rise, the mixing head temperature is maintained by cooling in a range appropriate for the specific urethane material and to attain a workable gel time. From the time mixing commences until the reacting material is fed into each top mould 51a, 51b, 51c etc or bottom mould half 59a, 59b, 59c etc is about 4-7 seconds. Top preheated mould halves 51a, 51b, 51c etc are filled and placed in fixture unit 30 using pins 72,73 moving into holes 71a, 71b in each mould 51a, 51b, 51c etc. After the reacting materials have resided in top mould halves 51a, 51b, 51c etc for about 50-80 seconds, a core 14 is lowered at a controlled speed into the gelling reacting mixture by lowering frame unit 44 using an pneumatic powered arrangement not shown. Alternatively, electric or hydraulic systems may be used. Controlled lowering is accomplished by adjustment of the powered arrangement and by use of pneumatic controls not shown to lessen and preferably prevent air bubbles. Stop 39b limits movement downward. The amount of mixture introduced into each mould half 51a is 5.4-5.7 g. At a later time a bottom mould half 59 of a series of bottom mould halves 59a, 59b, etc has similar mixture amounts introduced into its cavity 58 (Figure 6).

Upon location of the coated core 14 in halves mould 51a, 51b, 51c after gelling for 50-80 seconds, the vacuum is released in line 46a allowing core 14 to be released. Mould halves 51a, 51b, 51c with core 14 and solidified cover half 80 thereon is removed from the centring fixture unit 30, inverted (see Figure 6) and mated with other mould halves 59a, 59b, 59c which, at an appropriate time earlier have had a selected quantity of reacting polyurethane prepolymer and curing agent introduced therein to commence gelling.

When a plurality of mould halves 51a, 51b, 51c etc and 59a, 59b, 59c etc are filled and clamped at one time, the following time sequence is preferred.

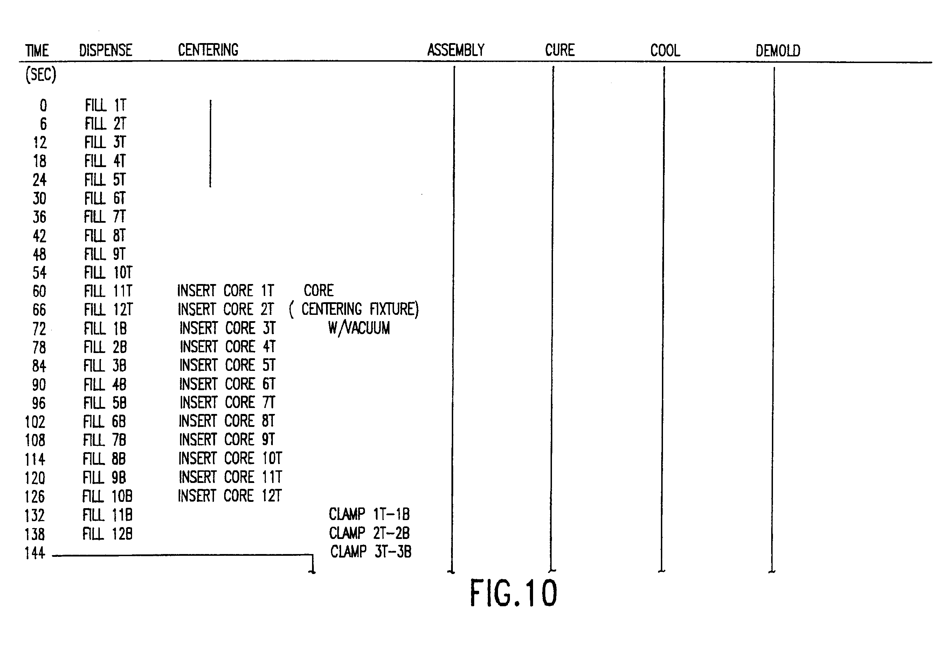

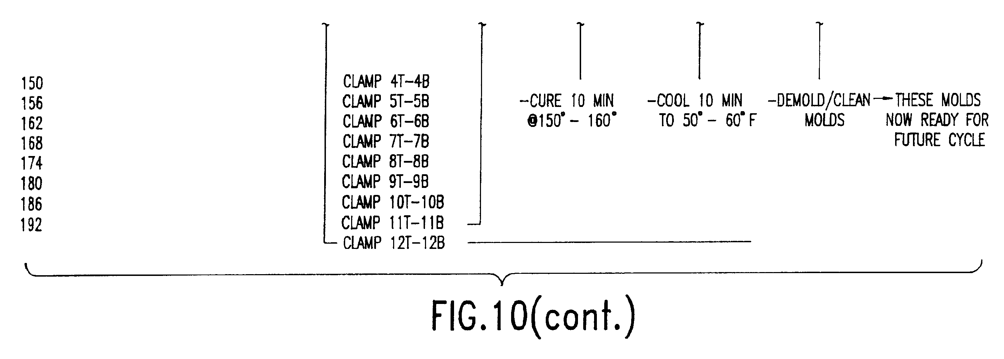

The sequence of introducing the polyurethane mix into the top mould half 51a (1T) and its mate the bottom mould half 59a (1B) is as follows: Introduction of the mixed prepolymer and curative into the top mould 51a starts the time sequence which start is referred to herein as time zero. The top half mould 51a receives the mix first at time zero and shortly mould half is placed in fixture unit 50. The core is initially inserted in the mix located in top mould 51a at time 60 seconds (see Figure 10). At time 72 seconds, bottom mould half 59a (1B) is filled and at time 132 seconds, the mould halves 51a, 59a (1T-1B) are mated and clamped. At time 126 seconds, the mix has been in top half 51a 126 seconds and mix has been in bottom half 50a for 60 seconds. The sequence of filling other mould halves 51b (2T) and 59b (2T) and so forth follows a similar pattern. Within this sequence of mixing and dispensing of the prepolymer and curative commences at -4 to -7 seconds.

The thorough mixing that takes place in mixer 60 for the period of time described provides an improved cover material. Mould halves 51, 53 are preheated to 160-190°F (71 to 87°C). The core is held in its fully-down position for 30-40 seconds and the vacuum is then released. Following clamping of mould halves, the clamped mould is put in a curing oven for approximately 10 minutes to reach a mould temperature of 140-180°F (60 - 82°C) followed by cooling for approximately 10 minutes to reach a mould temperature of 50-70°F (10 - 21°C).

The mould halves are clamped together under 400-600 psi pressure. The mould halves each contains sufficient reacting material to form hemispherical portions of the cover. Mould halves are held together for 10-15 minutes and thereafter cooled from 140°F-180°F (60 - 82°C) to 50°F-70°F (10 - 21°C) and then opened to demould the ball. Excess polyurethane is extruded from the mould cavity into sprue channels 51s forming solidified sprues not shown.

### Example I

A wound centre was dipped in a 30% pre-vulcanised latex solution, drained and partially dried in a current of warm air. Remainder of drying was accomplished at room temperature. Latex penetration was approximately 50 mils (1.27mm). A mould half was preheated to approximately 160°F (71°C).

A mixture of 100 parts of Betathane 23.711, and MDI-based polyether prepolymer, 5.19 parts of titanium dioxide dispersion and 48.27 parts of Polamine 250 was prepared. Approximately 5.6 g of this mixture was dispensed into a heated mould cavity and allowed to thicken for approximately one minute. A dipped wound core with a diameter of 1.580" (40mm) was placed in the bottom mould cavity by means of the centring fixture shown in Figure 3. The core was held in a concentric position for approximately 40 seconds to allow the material to thicken further to support the core. The top heated mould half was then filled and the material allowed to thicken for approximately 1 minute. The top and bottom mould halves were then assembled and clamped by bolts or any conventional manner. The assembled mould was introduced into a curing oven and cured for 10 minutes at approximately 160°F (71°C). The assembled mould was then introduced into a cooling chamber for approximately 10 minutes to reach a mould temperature of 50-70°F (10-21°C).

The resulting cover was approximately 50 mils (1.27mm) thick on a side and had a Shore D durometer of approximately 58-60 when measured after a two-day waiting period. Subsequently, the ball was painted and the cover was observed to be highly abrasion and cut resistant. Spin rate of this ball was approximately 100-200 rpm lower than a balata covered ball (Tour 100) with an acceptable velocity of 252.7 ft/sec (77.02m/s).

### Example II

The steps of Example I were carried out except that the wound core was not dipped in a latex solution.

### Example III

The steps of Example I were carried out except that a solid core was used.

### Example IV

The steps of Example I were carried out with a solid core without a latex dip.

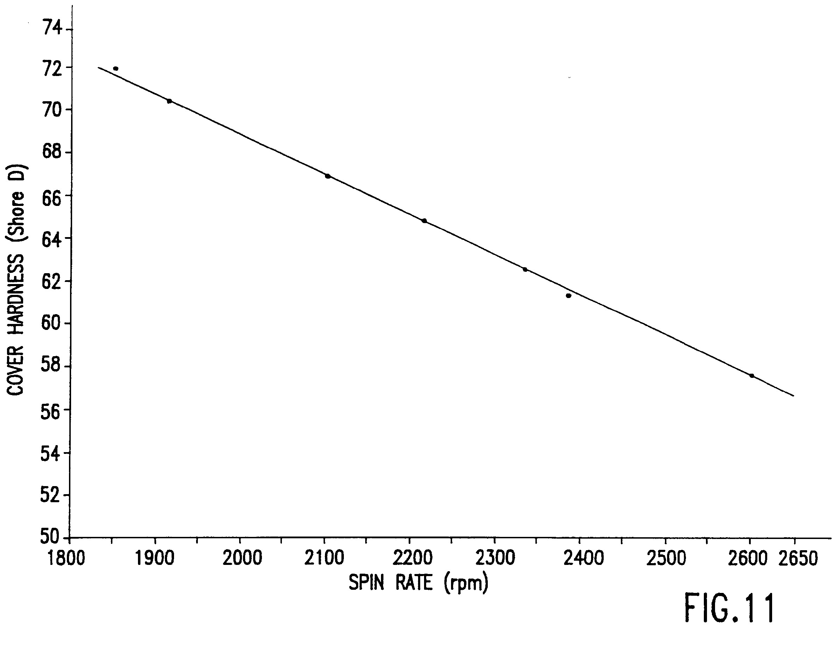

A range of core sizes that can be employed in this invention, whether dipped on non-dipped, is 1.560" to 1.610" (39.62 to 40.89mm) was determined by previous testing that as core size of the ball increases, ball velocity increases (Figure 11). However, if the durometer of the cover remains the same, spin rate of the ball was materially unaffected. Spin rate can be changed by modifying the durometer of the cover by selecting different ratios of materials or combining other materials. Cover durometers of 48 Shore D to 72 Shore D are attainable with the preferred range of 58-62 for this type of ball.

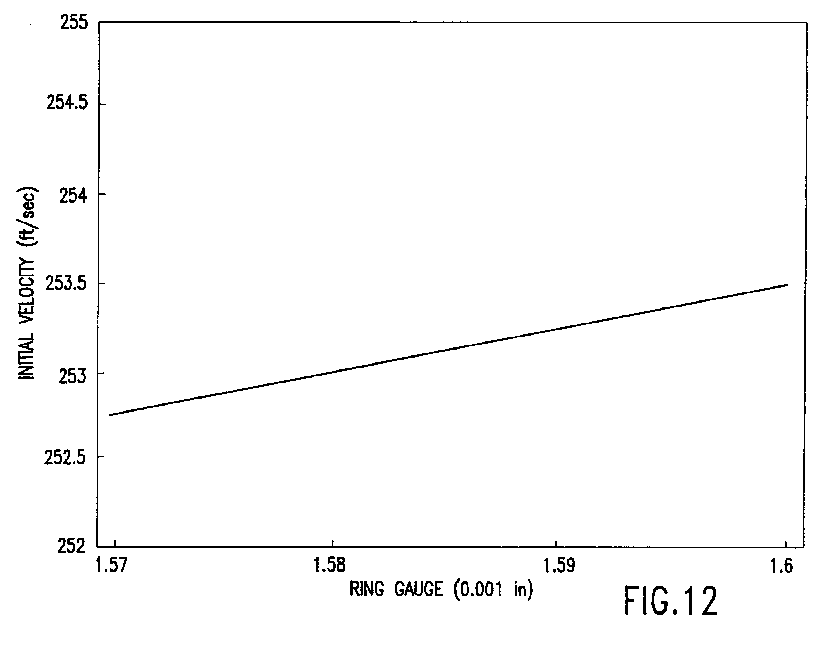

The relationship between durometer and spin rate was determined to be linear with harder durometer covers producing lower spin rates (Figure 12).

## Claims

1. A method of making a golf ball using a core holder and first and second mould halves with the first mould half positioned below the core holder, comprising the steps of placing polyurethane in the first mould half, positioning the core in the first mould half, placing polyurethane in the second mould half, and closing the first and second mould halves about the core, characterised by the steps of:
a) placing a core in the core holder which in turn is held by a movable fixture, wherein the movable fixture comprises an adjustable mould holding means for centring the core;
b) causing the fixture with the core holder to descend against the polyurethane in the first mould half when such polyurethane is in a selected state of gel and causing thereafter the fixture means to move at a controlled rate against the polyurethane toward the first mould half;
c) as core downward movement continues, moulding a quantity of partially gelled polyurethane around one half of the core in said first mould half;
d) disengaging the core from the core holder after a selected period of time;
e) thereafter placing such core with its partially cured polyurethane cover while still in said first mould half against a second mould half having polyurethane at a selected state of gel therein and mating the two mould halves together; and
f) heating the mated halves and further curing the polyurethane and thereafter opening the mould.

2. A method of making a golf ball according to Claim 1, characterised by the step of encapsulating the core with an encapsulating material prior to placing the encapsulated core in the core holder held by the movable fixture.

3. The method of Claim 2, in which the encapsulating material is a latex from 0.001 to 0.010 inch (0.0254 - 0.254mm) thick.

4. The method of Claim 2 in which a wound core is impregnated with a layer of latex which penetrates into the core to a depth of 0.050 inch (1.27mm).

5. The method of Claim 1,in which the first mould half is held by mould holding means preadjusted prior to descent of the fixture means.

6. The method of Claim 1 in which the core diameter is in the range of 1.560-1.610 inches (39.62 to 40.89mm).

7. The method of Claim 1 in which the polyurethane includes polyether polyols and polyamines.

8. The method of Claim 1 in which the rate of descent of the core on the fixture is such that no air bubbles are created as the core enters the polyurethane in the mould.

9. Apparatus for moulding a golf ball cover around a core comprising a fixture, a mould half and adjustable mould holding means in turn comprising:
a) a guide frame;
b) a holder frame movable up and down on a guide frame;
c) a ball core holder adjustably mounted on the holder frame;
d) alignment means for initially aligning the holder frame and the ball core holder prior to moulding including a set mould half, mould guide rails, alignment pins and adjustment fasteners;
e) limit means on the guide frame to limit the downward travel of the holder frame; and
f) lowering means controlling the descent of portions of the holder frame carrying the ball core holder to control the movement of the core into the mould.

10. A method of making a golf ball according to Claim 1, characterised in that the mould halves are preheated to a temperature of from 140 to 180°F (60 to 82°C).

11. A method according to claim 1, characterised in that the quantity of polyurethane including prepolymer and curing agent in the first mould half is allowed to thicken after mixing of the prepolymer and curing agent for 100 seconds prior to release of the core by the core holder, and the quantity of polyurethane in the second mould half thickens for 60 seconds prior to mating of the halves.

12. A method according to claim 1, characterised in that the polyurethane is a product of the reaction between a polyurethane prepolymer and a curing agent with the polyurethane prepolymer being a product formed by the reaction between a polyol and a diisocyanate.

13. A method according to claim 12, characterised in that the prepolymer is a product formed by the reaction between 4,4'-diphenylmethane diisocyanate and a polyether type polyol.

14. A method according to claim 12, characterised in that the curing agent is polytetramethyleneoxide-di-p-aminobenzoate.

15. A method according to claim 2, characterised in that the polyurethane includes a polyurethane prepolymer and a curing agent which are mixed and thereafter gel for 50 to 80 seconds before the step of disengaging the core from the core holder.

16. A method according to claim 5, characterised in that the moulding means is preadjusted by the steps of releasing the mould holding means, causing a set-up core attached to the movable fixture to descend into the first mould half to move the mould holding means and thereafter securing the mould holding means in a fixed place.

17. A method according to claim 1, characterised in that the adjustable mould holding means comprises:
a) a guide frame;
b) a holder frame movable on the guide frame;
c) a ball core holder adjustably mounted on the holder frame;
d) alignment means for initially aligning the holder frame and the ball core holder prior to moulding, including a set mould half, mould guide rails, alignment pins and adjustment fasteners;
e) limit means on the guide frame to limit the downward travel of the holder frame; and
f) lowering means controlling the descent of portions of the holder frame carrying the ball core holder to control the movement of the core into the mould.

## Patentansprüche

1. Verfahren zur Herstellung eines Golfballs unter Verwendung eines Kernhalters und einer ersten und einer zweiten Formhälfte, wobei die erste Formhälfte unterhalb des Kernhalters angeordnet ist, umfassend die Schritte des Einbringens von Polyurethan in die erste Formhälfte, des Positionierens des Kerns in der ersten Formhälfte, des Einbringens von Polyurethan in die zweite Formhälfte und des Schließens der ersten und zweiten Formhälften um den Kern, gekennzeichnet durch die folgenden Schritte
a) Einbringen eines Kerns in einen Kernhalter, der wiederum durch eine bewegliche Befestigungsvorrichtung gehalten wird, wobei die bewegliche Befestigungsvorrichtung einstellbare Formhaltemittel zur Zentrierung des Kerns umfaßt;
b) Bewirken, daß sich die Befestigungsvorrichtung mit dem Kernhalter gegen das Polyurethan in der ersten Formhälfte absenkt, wenn sich das Polyurethan in einem bestimmten Gel-Zustand befindet, und anschließendes Bewirken, daß sich das Befestigungsmittel mit einer gesteuerten Geschwindigkeit gegen das Polyurethan in Richtung der ersten Formhälfte bewegt,
c) Formen einer Menge von teilweise geliertem Polyurethan um die eine Hälfte des Kerns in der ersten Formhälfte, während die Abwärtsbewegeung des Kerns andauert;
d) Entfernen des Kerns von dem Kernhalter nach einer ausgewählten Zeitspanne;
e) anschließendes Bringen des Kerns mit seiner teilweise ausgehärteten Polyurethanhülle, während dieser sich noch in der ersten Formhälfte befindet, gegen eine zweite Formhälfte, die mit Polyurethan in einem bestimmten Gel-Zustand gefüllt ist, und formschlüssiges Verbinden der beiden Formhälften miteinander; und
f) Erwärmen der verbundenen Hälften und weiteres Aushärten des Polyurethans und anschließendes Öffnen der Form.

2. Verfahren zur Herstellung eines Golfballs nach Anspruch 1,
gekennzeichnet durch den Schritt des Einhüllens des Kerns mit einem Hüllmaterial vor dem Einbringen des eingehüllten Kerns in den Kernhalter, der durch eine bewegliche Befestigungsvorrichtung gehalten wird.

3. Verfahren nach Anspruch 2,
in dem das Hüllmaterial ein Latex mit einer Dicke von 0,001 bis 0,010 Zoll (0,0254 - 0,254 mm) ist

4. Verfahren nach Anspruch 2,
in dem ein gewickelter Kern mit einer Latexschicht imprägniert wird, die in den Kern bis zu einer Tiefe von 0,050 Zoll (1,27 mm) eindringt.

5. Verfahren nach Anspruch 1,
in dem die erste Formhälfte durch Formhaltemittel gehalten wird, die vor dem Absenken der Befestigungsmittel ausgerichtet werden.

6. Verfahren nach Anspruch 1,
in dem der Kerndurchmesser in dem Bereich von 1,560 - 1,610 Zoll (39,62 bis 40,89 mm) liegt.

7. Verfahren nach Anspruch 1,
in dem das Polyurethan Polyether, Polyole und Polyamine einschließt.

8. Verfahren nach Anspruch 1,
in dem die Absenkgeschwindigkeit des Kerns an der Befestigungsvorrichtung so groß ist, daß keine Luftblasen gebildet werden, wenn der Kern in das Polyurethan in der Form eintritt.

9. Vorrichtung zum Formen einer Golfballhülle um einen Kern, umfassend eine Befestigungsvorrichtung, eine Formhälfte und einstellbare Formhalterungsmittel, die wiederum aufweisen:
a) einen Führungsrahmen;
b) einen Halterrahmen, der auf- und abwärts beweglich an einem Führungsrahmen ist;
c) einen Ballkernhalter, der einstellbar an dem Halterrahmen befestigt ist;
d) Ausrichtungsmittel zur anfänglichen Ausrichtung des Halterrahmens und des Ballkernhalters vor dem Formen einschließlich eines Satzes Formhälften, Formführungsschienen, Ausrichtungsstiften und Einstellschrauben;
e) Begrenzungsmittel an dem Führungsrahmen zur Begrenzung der Abwärtsbewegung des Halterrahmens; und
f) Absenkungsmittel, die das Absenken von Teilen des Halterrahmens steuern, die den Ballkernhalter tragen, zur Steuerung der Bewegung des Kerns in die Form.

10. Verfahren zur Herstellung eines Golfballs nach Anspruch 1,
gekennzeichnet dadurch,
daß die Formhälften auf eine Temperatur von 140° bis 180 F (60 bis 82°C) vorerwärmt werden.

11. Verfahren nach Anspruch 1,
gekennzeichnet dadurch,
daß die Menge des Polyurethans einschließlich des Vorpolymers und des Aushärtungsmittels in der ersten Formhälfte in der Lage ist, nach dem Mischen des Vorpolymers mit dem Aushärtungsmittel in 100 Sekunden verdicken zu können, bevor der Kern durch den Kernhalter losgelassen wird, und die Menge des Polyurethans in der zweiten Formhälfte in 60 Sekunden verdickt, bevor die Hälften zusammengesetzt werden.

12. Verfahren nach Anspruch 1,
gekennzeichnet dadurch,
daß das Polyurethan ein Produkt der Reaktion zwischen einem Polyurethan-Vorpolymer und einem Aushärtungsmittel ist, wobei das Polyurethan-Vorpolymer ein Produkt ist, das durch die Reaktion zwischen einem Polyol und einem Diisocyanant gebildet wird.

13. Verfahren nach Anspruch 12,
gekennzeichnet dadurch,
daß das Vorpolymer ein Produkt ist, das durch die Reaktion zwischen einem 4,4'-Diphenylmethan und einem Polyol des Polyethertyps gebildet wird.

14. Verfahren nach Anspruch 12,
gekennzeichnet dadurch,
daß das Aushärtungsmittel Polytetamethylenoxid-Di-p-Aminobenzoat ist.

15. Verfahren nach Anspruch 2
gekennzeichnet dadurch,
daß das Polyurethan ein Polyurethan-Vorpolymer und ein Aushärtungsmittel einschließt, die gemischt und anschließend für 50 bis 80 Sekunden vor dem Schritt des Lösens des Kerns vom Kernhalter geliert werden.

16. Verfahren nach Anspruch 5,
gekennzeichnet dadurch,
daß die Formmittel voreingestellt werden durch-die Schritte des Lösens der Formhaltemittel, des Bringens eines ausgehärten Kerns, der an der beweglichen Befestigung angebracht ist, dazu, in die erste Formhälfte abzusinken, um die Formhaltemittel zu bewegen, und anschließend der Sicherung des Formhaltemittel an einem festen Platz.

17. Verfahren nach Anspruch 1,
gekennzeichnet dadurch,
daß die einstellbaren Formhaltemittel umfassen:
a) einen Führungsrahmen,
b) einen Halterrahmen, der auf dem Führungsrahmen beweglich ist,
c) einen Ballkernhalter, der einstellbar an dem Halterrahmen befestigt ist,
d) Ausrichtungsmittel zur anfänglichen Ausrichtung des Halterrahmens und des Ballkernhalters vor dem Formen einschließlich eines Satzes Formhälften, Formführungsschienen, Ausrichtungsstiften und Einstellschrauben,
e) Begrenzungsmittel an dem Führungsrahmen zur Begrenzung der Abwärtsbewegung des Halterrahmens; und
f) Absenkungsmittel, die das Absenken von Teilen des Halterrahmens steuern, die den Ballkernhalter tragen, zur Steuerung der Bewegung des Kerns in die Form.

## Revendications

1. Procédé de réalisation d'une balle de golf à l'aide d'un support de noyau et de première et deuxième moitiés de moule, la première moitié de moule étant positionnée en dessous du support de noyau, comprenant les étapes consistant à disposer du polyuréthanne dans la première moitié de moule, à positionner le noyau dans la première moitié de moule, à disposer du polyuréthanne dans la deuxième moitié de moule, et à fermer les première et deuxième moitiés de moule autour du noyau, caractérisé par les étapes consistant à :
a) disposer un noyau dans le support de noyau, qui est lui-même maintenu par un châssis mobile, le châssis mobile comprenant des moyens de maintien de moule ajustables pour centrer le noyau ;
b) faire descendre le châssis avec le support de noyau contre le polyuréthanne dans la première moitié de moule lorsque ce polyuréthanne est dans un état de gel sélectionné, et faire ensuite se déplacer le châssis à une vitesse contrôlée contre le polyuréthanne vers la première moitié de moule ;
c) lorsque le mouvement vers le bas du noyau se poursuit, mouler une quantité de polyuréthanne partiellement en gel autour d'une moitié du noyau dans ladite première moitié de moule ;
d) dégager le noyau du support de noyau après une période de temps sélectionnée ;
e) disposer ensuite ce noyau avec sa couverture de polyuréthanne partiellement durcie lorsqu'elle est encore dans ladite première moitié de moule contre une deuxième moitié de moule ayant du polyuréthanne dans un état de gel sélectionné à l'intérieur de celle-ci et adapter les deux moitiés de moule l'une contre l'autre ; et
f) chauffer les moitiés adaptées et durcir encore le polyuréthanne, puis ouvrir ensuite le moule.

2. Procédé de réalisation d'une balle de golf selon la revendication 1, caractérisé par l'étape d'encapsulage du noyau par un matériau d'encapsulage avant de disposer le noyau encapsulé dans le support de noyau maintenu par le châssis mobile.

3. Procédé selon la revendication 2, dans lequel le matériau d'encapsulage est un latex ayant une épaisseur comprise entre 0,0254 et 0,254 mm (0,001 à 0,010 pouce).

4. Procédé selon la revendication 2, dans lequel un noyau enroulé est imprégné d'une couche de latex qui pénètre dans le noyau à une profondeur de 1,27 mm (0,050 pouce).

5. Procédé selon la revendication 1, dans lequel la première moitié de moule est maintenue par des moyens de maintien de moule préajustés avant la descente du châssis.

6. Procédé selon la revendication 1, dans lequel le diamètre du noyau est situé dans la plage comprise entre 39,62 et 40,89 mm (1,560 et 1,610 pouce).

7. Procédé selon la revendication 1, dans lequel le polyuréthanne comprend des polyols de polyéther et des polyamines.

8. Procédé selon la revendication 1 dans lequel la vitesse de descente du noyau sur le châssis est telle qu'aucune bulle d'air n'est créée lorsque le noyau entre dans le polyuréthanne dans le moule.

9. Dispositif pour mouler un revêtement de balle de golf autour d'un noyau comprenant un châssis, une moitié de moule et des moyens de maintien de moule ajustables, comprenant eux-mêmes :
a) un bâti de guidage ;
b) un bâti de support mobile vers le haut et vers le bas sur un bâti de guidage ;
c) un support de noyau de balle monté de façon ajustable sur le bâti de support ;
d) des moyens d'alignement pour aligner initialement le bâti de support et le support de noyau de balle avant le moulage, comprenant une moitié de moule de durcissage, des rails de guidage de moule, des broches d'alignement et des dispositifs de fixation d'ajustage ;
e) des moyens de limite sur le bâti de guidage pour limiter le déplacement vers le bas du bâti de support ; et
f) des moyens d'abaissement contrôlant la descente de parties du bâti de support portant le support de noyau de balle afin de contrôler le mouvement du noyau dans le moule.

10. Procédé de réalisation d'une balle de golf selon la revendication 1, caractérisé en ce que les moitiés de moule sont préchauffées à une température comprise entre 60 et 82°C (140 et 180°F).

11. Procédé selon la revendication 1, caractérisé en ce qu'on laisse la quantité de polyuréthanne comprenant un prépolymère et un agent durcisseur dans la première moitié de moule s'épaissir après mélange du prépolymère et de l'agent durcisseur pendant 100 secondes avant la libération du noyau hors du support du noyau, et en ce que la quantité de polyuréthanne dans la deuxième moitié de noyau s'épaissit pendant 60 secondes avant l'adaptation des moitiés.

12. Procédé selon la revendication 1, caractérisé en ce que le polyuréthanne est un produit de la réaction entre un prépolymère de polyuréthanne et un agent durcisseur, le prépolymère de polyuréthanne étant un produit formé par la réaction entre un polyol et un diisocyanate.

13. Procédé selon la revendication 12, caractérisé en ce que le prépolymère est un produit formé par la réaction entre le diisocyanate de 4,4'-diphénylméthane et un polyol de type polyéther.

14. Procédé selon la revendication 12, caractérisé en ce que l'agent durcisseur est du di-p-aminobenzoate de polyoxytéthaméthylène.

15. Procédé selon la revendication 2, caractérisé en ce que le polyuréthanne comprend un prépolymère de polyuréthanne et un agent durcisseur qui sont mélangés, puis mis ensuite sous forme de gel pendant 50 à 80 secondes avant l'étape de libération du noyau depuis le support de noyau.

16. Procédé selon la revendication 5, caractérisé en ce que les moyens de moulage sont préajustés par des étapes de libération des moyens de maintien de moule, provoquant la descente d'un noyau durci fixé au châssis mobile dans la première moitié de moule de façon à déplacer les moyens de maintien de moule, puis à fixer ensuite les moyens de maintien de moule en une position fixe.

17. Procédé selon la revendication 1, caractérisé en ce que les moyens de maintien de moule ajustables comprennent :
a) un bâti de guidage ;
b) un bâti de support mobile sur le bâti de guidage ;
c) un support de noyau de balle monté de façon ajustable sur le bâti de support ;
d) des moyens d'alignement pour aligner initialement le bâti de support et le support de noyau de balle avant le moulage, comprenant une moitié de moule de durcissage, des rails de guidage de moule, des broches d'alignement et des dispositifs de fixation d'ajustage ;
e) des moyens de limite sur le bâti de guidage pour limiter le déplacement vers le bas du bâti de support ; et
f) des moyens d'abaissement contrôlant la descente de parties du bâti de support portant le support de noyau de balle afin de contrôler le mouvement du noyau dans le moule.
